# EUROPEAN PATENT APPLICATION

(11) **EP 2 670 106 A1**
(43) Date of publication of application: **04.12.2013**
(21) Application number: 12397515.3
(22) Date of filing: 28.05.2012
(51) Int. Cl.: H04L 29/06, H04L 29/12

(54) **Mobile SIP proxy integration**

(71) Applicant: AinaCom Oy, 13130 Hämeenlinna (FI)
(72) Inventor: Österman, Sauli, 13130 Hämeenlinna (FI)
(74) Representative: Kolster Oy Ab

(57) **Abstract**

A method for receiving (2-6) a notification message indicating a mobile subscriber changing his status from offline to online; and triggering (2-8), in response to receiving the notification message, a subscriber registration procedure for registering the subscriber to an external SIP proxy as a proxy end point by sending a registration message to the external SIP proxy, the registration message comprising an identifier of the subscriber.

## Description

### BACKGROUND OF THE INVENTION

The present invention relates to the integration of a SIP proxy, and more particularly to the integration of a mobile device as a SIP endpoint to form a cohesive, unified communications solution.

### BACKGROUND OF THE INVENTION

It is common that companies have IP PBX exchanges (Internet Protocol Private Branch Exchange) or SIP (Session initiation Protocol) proxies in use but still the bulk of the communication goes through the mobile terminals of the company. An IP PBX/SIP proxy is mainly used by attendants and services that require, for example, queuing or interactive voice response IVR functionalities. A disadvantage of this approach is that when part of the communication occurs through the mobile terminals and the rest through a PBX/SIP proxy extension, the services are not aware of each other, which causes a presence of a user not to be valid in both of the services.

The services can be integrated such that a software (SW) client is installed in the mobile terminal. In this approach the SW client is a VoIP (Voice over Internet Protocol) client, which registers to the SIP proxy and then routes the calls via a packet-switched PS data connection as VoIP calls. The SW client updates a presence status of the mobile phone to the SIP proxy and the SW client records a dialling user, calls a circuit-switched CS call to predefined number which is routed to the SIP proxy's dial-in service, and sends the user dialling to the proxy using DTMF (Dial Tone Multi-Frequency Signalling) signals.

The problem with the aforementioned integration is that not all of the mobile terminals support such SW clients. Of those terminals, which support the SW clients, many of them have variation in the operating system, which means that multiple clients must be developed.

### BRIEF DESCRIPTION OF THE INVENTION

It is thus an object of the invention to provide a method and an apparatus for implementing the method so as to overcome the above problems. The objects of the invention are achieved by a method and an arrangement, which are characterized by what is stated in the independent claims. The preferred embodiments of the invention are disclosed in the dependent claims.

The invention is based on the idea of making a mobile device with circuit-switched mobile services appear to the SIP proxy as a SIP client.

It is an advantage of the method and arrangement of the invention that the mobile device can be reliably masked to perform as one part of a multiple communications endpoint arrangement(s) both in behaviour and statistics.

### BRIEF DESCRIPTION OF THE DRAWINGS

In the following the invention will be described in greater detail by means of preferred embodiments with reference to the attached drawings, in which
Figure 1 shows a system diagram for a registering procedure and a call procedure according to the invention and its embodiments;
Figure 2 shows a signalling diagram for the registering procedure and a de-registration procedure according to the invention and its embodiments;
Figure 3 shows a signalling diagram for a call procedure according to the invention and its embodiments;
Figure 4 shows a system diagram for another call procedure according to the invention and its embodiments;
Figure 5 shows a signalling diagram for the call procedure according to the invention and its embodiments;
Figure 6 shows a system diagram for a messaging procedure according to the invention and its embodiments;
Figure 7 shows a signalling diagram for the messaging procedure according to the invention and its embodiments.
Figure 8 shows a system diagram for another messaging procedure according to the invention and its embodiments;
Figure 9 shows a signalling diagram for the messaging procedure according to the invention and its embodiments; and
Figure 10 shows a signalling diagram according to the invention and its embodiments.

### DETAILED DESCRIPTION OF THE INVENTION

The present solution is applicable to any user terminal, server, corresponding component, and/or to any communications system or any combinations of different communications systems that support 2G, 3G, 3.5G and/or 4G systems. The communications system may be a fixed communications system or a wireless communications system or a communications system utilizing both fixed networks and wireless networks. The used protocols, the specifications of communications systems, servers and user terminals, especially in wireless communications, develop rapidly. Such development may require extra changes to an embodiment. Therefore, all words and expressions should be interpreted broadly and they are intended to illustrate, not to restrict, the embodiment.

In the following, different embodiments will be described using as an example of a system architecture whereto the embodiments may be applied, an architecture based on an evolved UMTS (Universal Mobile Telecommunications System) terrestrial radio access network of an enhanced cellular network (E-UTRAN).

In other words, the invention and its embodiments can be applied to systems with circuit-switched CS core networks and/or 2G like GSM/EDGE networks, and/or 3G like UMTS networks and/or 4G or LTE networks. The 4G or LTE networks have packet switched core network, and the services with connections can be made with IMS (internet protocol multimedia subsystem). Also other types of access networks can be used in connection with the invention. Also a subscription of a common fixed network or a landline network can be integrated with the subscription state always on or always registered.

Although E-UTRAN is discussed as a primary example herein, the present solution is not limited to E-UTRAN, LTE (long term evolution), and/or 3GPP (3rd Generation Partnership Project) systems. Thus, the present solution may also be applicable in connection to other communications systems such as WiMax (worldwide interoperability for microwave access), HSDPA (high-speed downlink packet access), HSUPA (high-speed uplink packet access), and/or WLAN (wireless local area network) systems.

For example, the network may be based on the long term evolution LTE, LTE-Advanced (LTE-A), WiMax, WiFi, 4 G (fourth generation), Mobile Broadband Wireless Access (MBWA), GSM (Global System for Mobile Communications), system architecture evolution (SAE), evolved packet core (EPC), or 3 G technologies, like UMTS and CDMA-2000 systems.

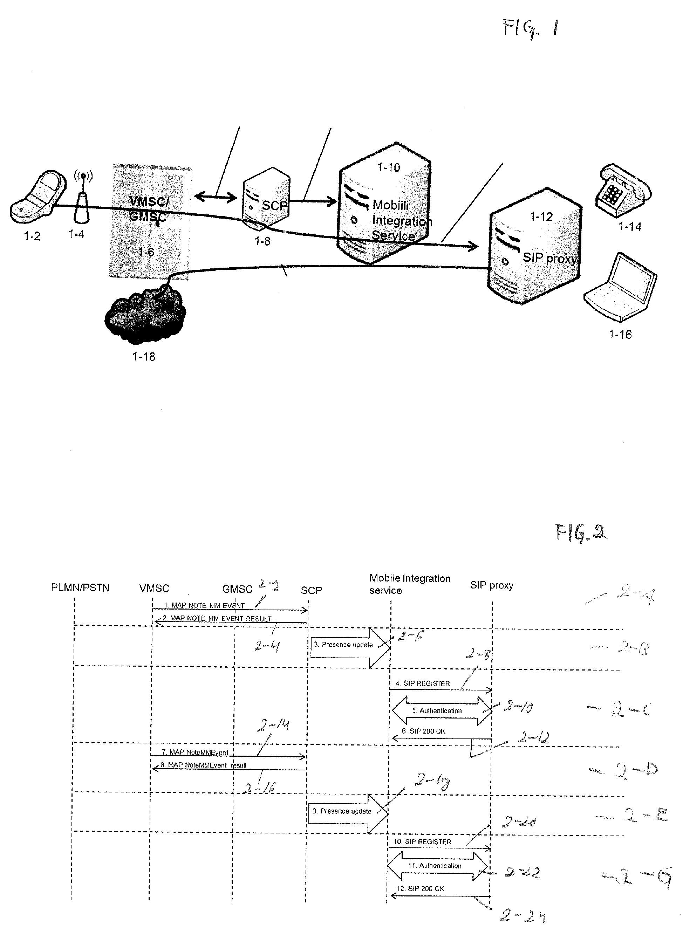

A user equipment according to the invention and its embodiments and shown in systems diagrams (e.g. the reference numbers 1-2, 1-14, 1-16 in Figure 1) may be e.g. a mobile or a wireless user terminal, such as a mobile phone (a mobile station), a user communication terminal with wire, a personal digital assistant (PDA), a game console, an e-reading device, a tablet, a smart phone, a personal computer (PC), a laptop, a desktop computer or the like, capable of processing presence data.

The user equipment that can be used according to the invention and its embodiments can be e.g. a conventional user equipment that can connect to a communications network and use e.g. circuit-switched services of the communications network. The user equipment can connect and/or register to a SIP proxy (e.g. Asterisk) via a WLAN network from which SIP proxy a call and/or other communication can be controlled and/or forwarded and/or received and transmitted as will be mentioned. The present circuit-switched services can thus be integrated as extensions of the LYNC service of the mobile equipment. Also the POTS/ISDN (plain old telephone service/integrated service digital network) subscribers of a wired network can be thus integrated.

The service can be e.g. connecting any call service correspondingly as the extension of the mobile station LYNC service.

The user equipment can be equipped with e.g. a wireless local area network service. The user equipment can comprise means for processing e.g. at least one of the following messages: a short message, an instant message, an e-mail message, a multimedia message, a unified messaging message, a WAP (Wireless Application Protocol) message an SIP (Session Initiation Protocol) message or a messaging message. The user equipment can also be user equipment equipped with a service for e.g. an instant message, an e-mail message, a multimedia message, a unified messaging message, a WAP message, or an SIP message service or a messaging message service and the services like voice calls, wireless Internet browsing, and web broadcasting.

The units illustrated in system diagrams, e.g. in Figure 1, may be software and/or software-hardware and/or firmware components (recorded indelibly on a medium such as a read-only memory or embodied a in hardwired computer circuitry). The techniques described herein may be implemented by various means so that an apparatus implementing one or more functions of a corresponding entity described with an embodiment can comprise not only prior art means, but also means for implementing the one or more functions of a corresponding apparatus described with an embodiment, and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. Software codes may be stored in any suitable, processor/computer readable data storage medium(s) or memory unit(s) or article(s) of manufacture and executed by one or more processors/computers.

Each of the network nodes may be any computing apparatus or device configured to perform functionality according to an implementation or embodiment described in detail below.

A network node, or a corresponding apparatus, or corresponding network equipment implementing functionality or some functionality according to an embodiment may generally include a processor (not shown in Figures), controller, control unit, micro-controller, or the like connected to a memory and to various interfaces of the apparatus. Generally the processor is a central processing unit, but the processor may be an additional operation processor. A Mobile Integration Service unit and/or the SIP proxy unit and other nodes or equipment may be configured as a computer or a processor, or a microprocessor, such as a single-chip computer element, or as a chipset, including at least a memory for providing storage area used for arithmetic operation and an operation processor for executing the arithmetic operation. The Mobile Integration Service unit and/or the SIP proxy unit may comprise one or more computer processors, application specific integrated circuits (ASIC), digital signal processors (DSP), digital signal processing devices (DSPD), programmable logic devices (PLD), field-programmable gate arrays (FPGA), and/or other hardware components that have been programmed in such a way as to carry out one or more functions of one or more embodiments. The Mobile Integration Service unit and/or the SIP proxy unit may thus be an element that comprises one or more arithmetic logic units, a number of special registers and control circuits. The Mobile Integration Service unit and/or the SIP proxy unit, other units and their subunits can be secured and duplicated.

In other words, the network node, or the corresponding apparatus, or the network equipment may generally include volatile and/or non-volatile memory (not illustrated in Figures), for example EEPROM (electrically erasable programmable read only memory), ROM (read only memory), PROM (programmable read only memory), RAM (random access memory), DRAM (dynamic random access memory), SRAM (static random access memory), double floating-gate field effect transistor, firmware, programmable logic, etc. and typically store content, data, or the like. The memory may also store computer program code such as software applications (for example, for the Mobile Integration Service unit and/or the SIP proxy unit, and/or the SCP unit, the MSC unit other units or operating systems, information, data, content, or the like for the processor to perform steps associated with operation of the apparatus in accordance with embodiments. The memory, or part of it, may be, for example, random access memory, a hard drive, or other fixed data memory or storage device implemented within the processor/network node or external to the processor/network node in which case it can be communicatively coupled to the processor/network node via various means as is known in the art. An example of an external memory includes a removable memory detachably connected to the apparatus.

Furthermore, the network node, or the corresponding apparatus, or network equipment may comprise other units, for example one or more plug-in units forming logical units, and the network node, or the corresponding apparatus, or network equipment comprises different interface units, such as a receiving unit (not illustrated in system Figures) for receiving different inputs, control information, requests and responses, for example, and a sending or a transmitting unit (not illustrated in Figures) for sending or transmitting different outputs, control information, responses and requests, for example. The receiving unit and the transmitting unit each provides an interface in an apparatus (the network node), the interface including a transmitter and/or a receiver or a corresponding means for receiving and/or transmitting information, and performing necessary functions so that content, control information, etc. can be received and/or transmitted. The receiving and sending units may comprise a set of antennas and/or transceivers and/or transmitters and receivers and/or inputs and outputs, the number of which is not limited to any particular number.

It should be appreciated that the network nodes, or corresponding apparatuses, or network equipment may comprise other units used in or for information transmission, in or for network/domain management systems, and/or for database management systems, which store database contents, allowing data creation and maintenance, and search and other access obtaining data from the database unit. However, the invention poses no specific requirements for them and, therefore, they need not to be discussed in more detail here.

The steps or points, messages and related functions described in connection with Figures 2, 3, 5, 7, 9 and 10 are in chronological order. However, in some embodiments, some of the steps/points may be performed simultaneously or in an order differing from the given one. Other functions can also be executed between the steps/points or within the steps/points and other messages sent between the illustrated messages, like TRYING or PRACK messages. Some of the steps/points or part of the steps/points can also be left out or replaced by a corresponding step/point or part of the step/point. The messages are only exemplary and may even comprise several separate messages for transmitting the same information. In addition, the messages may also contain other information. Further, other messages may be used to convey the information, like a short message and unstructured supplementary services data.

The invention can be described to a service, but the invention can also be implemented as a derivative service. The integration can be made to any SIP proxy by applying the signaling with the corresponding apparatus.

Figure 1 shows a system diagram for a registering procedure and a call procedure according to the invention and its embodiments. In it, the element 1-2 describes a terminal equipment or a mobile device, which is capable of initiating, placing and/or receiving calls, and sending and/or receiving messages, e.g. short messages in a communications network. The mobile device can access the communications network via an access network 1-4 of the communications network, e.g. via a base station subsystem or a radio network subsystem.

A circuit-switched mobile core network element is described by the element 1-6. The core network element can comprise a VMSC element (visiting mobile services switching centre element). It is an exchange element controlling the area, in which the mobile subscriber is presently located. The core network element can also comprise and/or a VLR element (Visitor Location Register), and/or a GMSC element (Gateway MSC). It can e.g. interrogate the routing of mobile terminating calls. VMSC can send notifications of registration and de-registration events of a mobile subscriber to an SCP (Service Control Point) element 1-8. VMSC/GMSC can request routing instructions from SCP on how to route an originating call or a terminating call of a user of the service or a service user. SCP can then return a pre-defined prefix which is added before the destination number with which the call can be routed to a Mobile Integration Service Element 1-10 by VMSC/GMSC. VMSC/GMSC can then route or direct the call to e.g. a SIP proxy element 1-12 at least partly based on the prefix or to a user allocated C number.

SCP 1-8 is a node that directs services in the intelligent network IN. The purpose of SCP is to receive notifications of attach and detach procedures of the subscriber's IMSI (International Mobile Subscriber Identity Code) number and of location update events from VMSC/GMSC. At least partly based on this information, SCP can determine whether the subscriber is currently registered to the network or not. SCP further delivers this information to the Mobile Integration Service Element 1-10. SCP is also responsible for implementing the forced routing services used to route the originating and terminating calls of the service user. In these services, SCP receives a triggering message from VMSC/GMSC, to which it responds with a new destination routing number. This can be either a prefix and original destination number, or a new number. The forced routing can mean that the mobile switching centre element knows, from either the prefix or the new number, where to send the call signalling messages (e.g., call setup messages).

The mobile integration service element 1-10 of the system diagram describes the service that is to be implemented, which will receive the registration and/or de-registration notifications from the SCP, and which can then register the subscriber as a SIP endpoint to the SIP proxy element 1-12. When it has received a new SIP session from the GMSC 1-6, said service element will recognize the subscriber from the SIP signalling, and it will begin a new SIP session to the SIP proxy 1-12 as an SIP extension of the subscriber in question, therefore combining the media of the incoming and outgoing sessions (B2BUA; back-to-back user agent). After it has received a SIP session from the SIP proxy, it will recognize the recipient from the SIP signalling, and it will begin a new session with GMSC to the mobile device, combining the media of the incoming and outgoing sessions.

SIP proxy 1-12 is an element, to whose SIP extension the service user's mobile device will be disguised. SIP proxy can receive the registration, and authenticate the user and deliver the traffic according to its configuration.

In Figure 1 there is also shown an element 1-14, which describes the SIP extension of the SIP proxy. The extension can be implemented on a platform dedicated to the service. The element 1-16 describes a SIP extension of the SIP proxy, which can be implemented programmatically to the aforementioned platform. The element 1-18 in Figure 1 describes a telephone network like the traditional telephone network PSTN (Public Switched Telephone Network).

In other words, between the elements 1-6 and SCP, the mobile presence service can be implemented using IN (Intelligent Network). SCP 1-8 can transmit and the mobile integration service element 1-10 can receive the registration and de-registration event, and the service will use this as an input for a SIP registration. The mobile originated MO call will be routed to the mobile integration server using an IN-based forced routing service. The Mobile Integration Service will then form a new SIP session to the SIP proxy and link the media. The call can then be directed outward via the operator's communications access interface as a call originating from the SIP proxy. A calling line identity CLI can be changed by the subscriber using a service developed on IN.

Figure 2 is a signalling diagram for a registration procedure and a de-registration procedure according to the invention and its embodiments. In step 2-2 (message MAP Note MM Event), VMSC informs SCP that a mobility management event, e.g., the subscriber has turned his phone on or off, has occurred. SCP acknowledges (message MAP Note MM Event result) this information in step 2-4. If SCP has determined (message Presence update) that the event is a network registration event, SCP will inform the Mobile Integration Service of this in step 2-6.

Next, in step 2-8, The Mobile Integration Service registers (message SIP REGISTER) the terminal apparatus or the mobile device as a SIP endpoint of the user. The Mobile Integration Service authenticates (message Authentication) the user to the SIP proxy in step 2-10. Finally, the SIP proxy acknowledges (message SIP 200 OK) the registration procedure in step 2-12.

The un-registration procedure begins with VMSC informing (message MAP Note MM Event) SCP that a mobility management event has occurred in step 2-14. In step 2-16 SCP acknowledges (message MAP Note MM Event result) this information.

If SCP has determined (message Presence update) in step 2-18 that the event is a network de-registration event, SCP will inform the Mobile Integration Service of this. The Mobile Integration Service de-registers (message SIP REGISTER) the mobile device as a SIP endpoint of the user in step 2-20 and the Mobile Integration Service authenticates (message Authentication) the user to the SIP proxy in step 2-22. Finally the SIP proxy acknowledges (message SIP 200 OK) the de-registration procedure in step 2-24.

In Figure 2, in steps noted by the reference number 2-A, if the user with M-CSI (Mobility management event CAMEL subscription information; CAMEL, Customised Applications for Mobile Network Enhanced Logic) initiates an IMSI attach or a location update within the same VLR (visitor location register) or into a different VLR, VMSC initiates NoteMMEvent message to inform SCP presence service that the event has occurred. In step 2-B SCP presence service keeps track, whether the mobile subscriber is online or not and sends the notification to the mobile integration service when the status changes to online. When receiving the indication that the mobile subscriber has changed his status and is online, the mobile integration service can initiate a registration procedure with the subscriber's credentials to the SIP proxy in steps 2C.

In steps 2-D, if the user with M-CSI initiates an MS initiated IMSI detach process, network initiated IMSI detach VMSC initiates NoteMMEvent message to inform SCP presence service that the event has occurred, and in steps 2E SCP presence service keeps track, whether the mobile subscriber is online or not and sends the notification to the mobile integration service when the status changes to offline.

In steps 2-G, when receiving the indication that the mobile subscriber has changed his status and is offline, the Mobile Integration service initiates an un-registration procedure (a registration procedure, which expires immediately) with the subscriber's credentials to the SIP proxy.

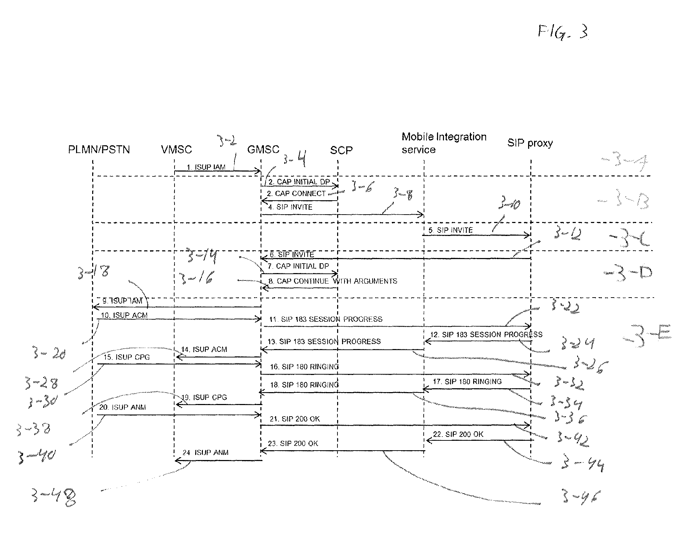

Figure 3 shows a signalling diagram for the call procedure according to the invention and its embodiments. In said procedure the service user originates (message ISUP Initial Address Message IAM) a call in step 3-2 using the mobile device or the terminal equipment. The call is routed to the operator's GMSC. GMSC requests (message CAP InitialDP) routing instructions from SCP in step 3-4 and SCP returns (signalling CAP Connect) in step 3-6 the destination number with an added routing prefix.

GMSC sends (message SIP Invite) in step 3-8 a SIP Invite to the Mobile Integration Service based on the routing prefix returned from SCP and in step 3-10 the Mobile Integration Service recognizes (message SIP Invite) the user and forms a SIP Invite message to SIP proxy.

In step 3-12 SIP proxy routes (message SIP Invite) the call to GMSC using a SIP trunk interface. GMSC requests (message CAP Initial DP) instructions in step 3-14 from SCP and SCP recognizes (message CAP ContinueWithArgument) in step 3-16 the user. If the user has defined a CLI number to be shown, SCP sends this number in the genericNumber parameter of the CAP message. The genericNumber is then packed into the ISUP IAM Additional Calling Party Number parameter, which has precedence over the Calling Party Number, when showing CLI to the called party.

The call is routed (message ISUP IAM) to its destination in step 3-18. After that the destination node informs (message ISUP Address Complete ACM) in step 3-20 GMSC that it has received the message. GMSC can then relay (message SIP 183 Session Progress) in step 3-22 this information to the SIP proxy.

In steps 3-24 to 3-30 SIP proxy relays (message SIP 183 Session Progress) this information to the Mobile Integration Service, the Mobile Integration Service receives and transmits or relays (message SIP 183 Session Progress) this information to GMSC, GMSC relays (message ISUP ACM) this information to the originating VMSC with ISUP and the destination node informs (message ISUP Call Progress (CPG)) GMSC that the called party is being paged, respectively.

In steps 3-32 to 3-38 GMSC relays SIP 180 Ringing information or message to SIP proxy, SIP proxy relays (message SIP 180 Ringing) this information to the Mobile Integration Service, Mobile Integration Service relays (message SIP 180 Ringing) this information to the GMSC and GMSC relays (message ISUP CPG) this information to the originating VMSC with ISUP. The destination node informs (message ISUP Answer ANM) in step 3-40 GMSC that the called party has answered the call, and GMSC relays (message SIP 200 OK) this information to SIP proxy in step 3-42.

After that SIP proxy relays SIP 200 OK information or message to Mobile Integration Service, Mobile Integration Service relays (message SIP 200 OK) this information to GMSC, and GMSC relays (message ISUP ANM) this information to the originating VMSC in steps 3-44 to 3-48, respectively.

As regards to Figure 3, the reference number 3-A describes a mobile user initiating a call. In this example the call is routed to the GMSC based on IMSI. However, this is not necessary and forced routing could be triggered from the VMSC. This can be done in order to reduce signaling messages in the diagram.

In steps 3-B GMSC can trigger the call to CAP (CAMEL Application Part) based forced routing service for originating call (preferably DP2). Prefix returned from the forced routing service routes the call to the Mobile Integration service SIP trunk.

In steps as described by 3-C, the Mobile Integration service recognizes calling subscriber from SIP invite and initiates a call to SIP proxy as a user SIP client.

In steps 3-D, SIP proxy routes the call to PSTN via the SIP trunk to GMSC. Incoming call is triggered to optional CAP based CLI change service, which may change additional calling number.

Rest of the messages, as shown by the reference number 3-E, are normal call initiating signaling toward PSTN (Public Switched Telephone Network) and message interworking backward to SIP and back again to ISUP part (ISDN - Integrated Services Digital Network - User Part).

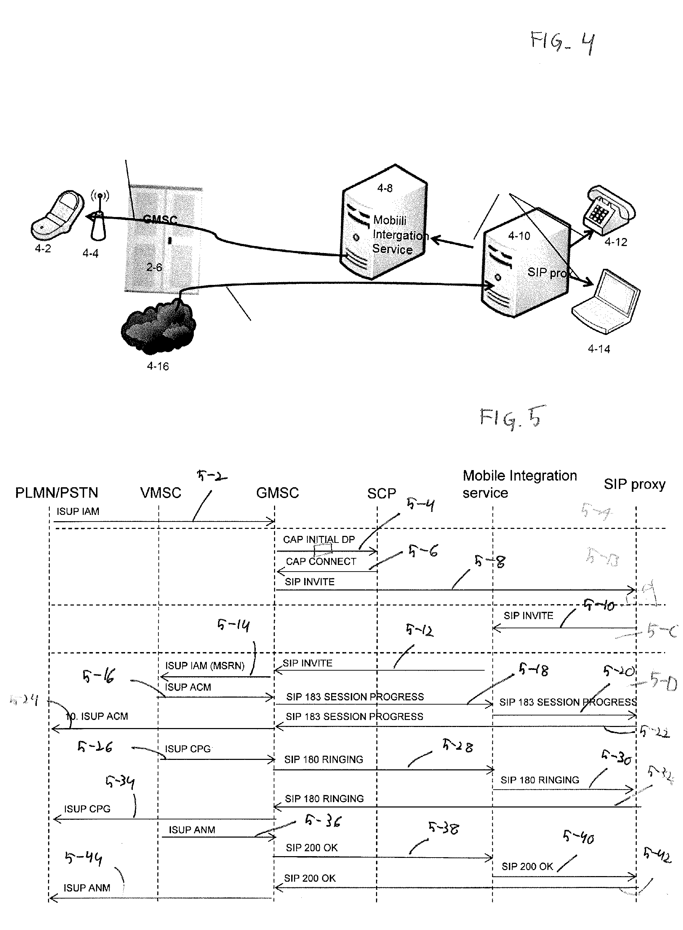

Figure 4 shows a system diagram for another call procedure according to the invention and its embodiments. It shows the mobile device 4-2, which is capable of placing/receiving calls and/or sending/receiving short messages in the mobile network. The element 4-4 describes the mobile network's access network, i.e. e.g. the base station subsystem/radio network subsystem providing access to a communications network, and the VMSC/VLR part of the CS (circuit-switched) core network.

The GSMC element 2-6, i.e. mobile network's CS core network Gateway MSC directs the mobile terminating call originating from the PSTN to the SIP proxy's (2-10, 4-10) SIP trunk instead of inquiring the HLR for routing information. To achieve this, for practical reasons, the GMSC may optionally request routing instructions from SCP (SCP is not shown in Figure 4 for legibility reasons). There can also exist a differing routing rule on an individual mobile number. GMSC can also direct the SIP trunk originating Mobile Integration Service calls to the HLR inquiry. Based on a HLR response, GMSC routes the call to VMSC (the element 2-4, 4-4). This functionality may require the Mobile Integration Service to mark the call using a prefix depending on the implementation.

The element 4-8 is the mobile Integration Service element. It can be defined to be the service to be implemented according to the invention and its embodiments that can, after receiving a SIP session from the SIP proxy 4-10, begin a new session with GMSC to the mobile number using the SIP trunk connection, and combine the two SIP sessions media (B2BUA).

As described above, the element 4-10 describes the SIP proxy, to whose SIP extension the service user's mobile device can be disguised. This means that the mobile device with mobile network services is connected to the SIP proxy in a manner that it appears to SIP proxy as a regular SIP terminal The SIP proxy 4-10 receives a session from the GMSC via the SIP trunk, and it can route the session to the correct subscriber (a SIP access), which in this case is the mobile subscriber that has registered itself with the Mobile Integration Service.

The SIP extension 4-12 of the SIP proxy can be implemented on a platform dedicated to the service. The SIP proxy's SIP extension 4-12 can also be implemented programmatically to the aforementioned platform. The element 4-16 describes the traditional telephone network (public switched telephone network or PSTN).

In the mobile terminating call, a call leg terminating to a public mobile phone number or another number of the subscriber can be directed to the SIP proxy using the operator's communications access interface. The routing may require, depending on the implementation, an IN based forced routing service to the terminating traffic. The SIP proxy can page the subscriber's endpoints simultaneously. A call leg terminating to a mobile device can be routed directly to the mobile station. The forced routing service will be bypassed using a routing prefix set in the originating part.

Figure 5 shows a signalling diagram for the mobile terminating call procedure according to the invention and its embodiments. The signalling diagram begins with the terminating call arriving (message ISUP Initial Address Message (IAM)) at GMSC in step 5-2. In response to that, GMSC requests (message CAP Initial DP) in step 5-4 routing instructions from SCP, and SCP returns (message CAP Connect) a routing prefix before the destination number in phase 5-6. Based on the routing prefix, GMSC forms (message SIP Invite) a SIP Invite message, and transmits it to the SIP proxy in phase 5-8.

The SIP proxy determines (message SIP Invite) that the call should be connected to the mobile device of service user, and it sends a SIP Invite message to the Mobile Integration Service in step 5-8. The Mobile Integration Service initiates (message SIP Invite in step 5-12) a SIP session with GMSC using the SIP trunk interface. A prefix can be added to the destination number in this part so that GMSC knows to bypass the forced routing service.

GMSC routes (message ISUP IAM (MSRN)) in step 5-14 the call to VMSC, where the subscriber is currently registered, and VMSC replies (message ISUP Address Complete (ACM)) in step 5-16 that it has received the message. Now, GMSC relays (message SIP 183 Session Progress) this information to the Mobile Integration Service in step 5-18 and the Mobile Integration Service receives and transmits or relays (message SIP 183 Session Progress) this information to the SIP proxy in step 5-20.

The SIP proxy can relay (message SIP 183 Session Progress) this information to GMSC in step 5-22, and GMSC relays (message ISUP ACM) this information to PSTN in ISUP in step 5-24. VMSC informs (message ISUP Call Progress (CPG)) GMSC in step 5-26 that the subscriber is being paged. In steps 5-28 to 5-34 GMSC relays SIP 180 Ringing information or message to the Mobile Integration Service, the Mobile Integration Service relays (message SIP 180 Ringing) this information to the SIP proxy, the SIP proxy relays (message SIP 180 Ringing) this information to GMSC, and GMSC relays (message ISUP CPG) this information to PSTN in ISUP.

The VMSC informs (message ISUP Answer (ANM)) in step 5-36 GMSC that the subscriber has answered the call, GMSC relays (message SIP 200 OK) this information in step 5-38 to the Mobile Integration Service, the Mobile Integration Service relays (message SIP 200 OK) in step 5-40 this information to the SIP proxy, and the SIP proxy relays (message SIP 200 OK) in step 5-42 this information to GMSC. Finally GMSC relays (message ISUP ANM) this information to PSTN in ISUP form in step 5-44.

Typically each SIP endpoint has its own IP address. Because in this case, the number of SIP endpoints on the same server may be in the thousands, this solution does not scale. The SIP client application then appears to the SIP proxy as it was a SIP endpoint behind a SIP supporting NAT (Network Address Translator) firewall. In practice, the SIP REGISTER message's contact header SIP URI (Session Initiation Protocol Uniform Resource Identifier) must include the TCP/UDP (Transmission Control Protocol/User Datagram Protocol) port allocated to the user.

In countries or areas like e.g. in Finland, each user in a SIP proxy must have a dedicated network number for the user's non-mobile device related emergency calls showing a fixed network CLI number. In non-emergency traffic, CLI of the SIP proxy originating call can be changed by the user using the IN service.

Mobile terminating calls can be routed to the SIP proxy using a forced routing service. To prevent a routing loop from occurring, the mobile terminating leg can be marked with a prefix so that the forced routing service can be bypassed.

As shown by the reference number 5-A, a mobile terminating MT call is routed from PSTN to GMSC. In steps 5-B, the MT call is triggered to the CAP based forced routing service for terminating call. Triggering occurs before HLR enquiry (DP2 or DP3; Detection Point). Forced routing service returns the routing prefix, which routes in GMSC the call to the SIP proxy's SIP trunk.

Next, in steps 5-C, the SIP proxy has determined that the call is terminating to SIP endpoint of the mobile user and initiates a SIP access session to the Mobile Integration service.

In steps within 5-D, Mobile Integration service initiates a MT session to GMSC via the SIP trunk with a special routing prefix. GMSC analyses the call and routes it to the HLR enquiry without triggering the forced routing service. HLR enquiry returns a Mobile Subscriber Roaming Number MSRN, which can be used as a routing number for the MT call. The rest of the signaling is normal call initiation signaling with the ISUP and SIP messages.

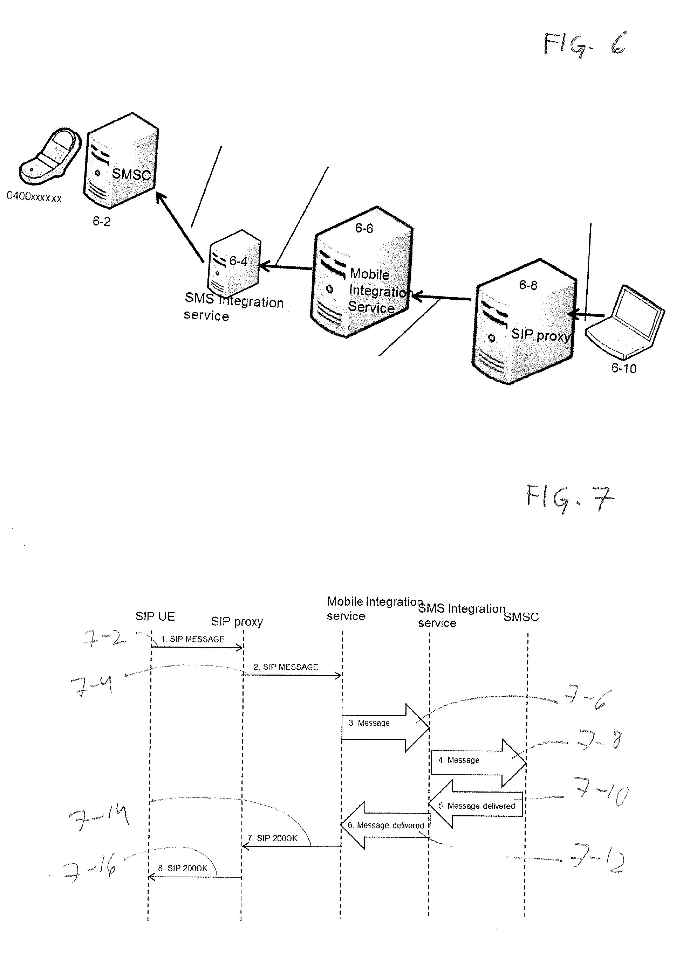

Figure 6 shows a system diagram for a messaging procedure according to the invention and its embodiments. The element 6-2 is a short message service centre SMSC through which short messages are transmitted. An SMS integration service 6-4 is a service, to which a message can be sent through an existing interface. The message can be modified into an SMS service message and delivered to the recipient. The sender in the service may choose that their calling party number is their mobile number. The SMS integration service will form a CDR (Charging Record) for billing purposes.

A service according to the invention and its embodiments is described by 6-6. After receiving an instant message IM from the SIP proxy 6-8, the service can be directed to a subscriber who has registered himself with the service, and can send the contents of the IM in the necessary number of short messages to the SMS integration service 6-4 and to the subscriber's mobile number. The SMS integration service can extract the recipient's number from its pre-defined location in the IM.

SIP proxy 6-8 is an element to whose SIP extension the mobile device can be disguised. The SIP proxy receives the IM sent by the SIP extension, whose recipient is the SIP URI registered by the Mobile Integration Service. The SIP URI belongs to a "user", who offers the services of the SMS integration service. The SIP extension of the SIP proxy is described by the element 6-10.

The SMS-GMSC can request routing instructions (e.g. VMSC address, i.e. Free Number subscriber location) for the mobile terminating SMS. SMS-GMSC or the service STP will direct the request to the free number service, which can instruct SMS-GMSC to route the request to the SMS integration service instead of HLR. The SMS integration service will return its own address to the SMS-GMSC. After that the SMS integration service will request routing instructions from HLR.

SMS-GMSC can then deliver the mobile terminating SMS to the SMS integration service and the SMS integration service delivers the short message SM to VMSC, where the subscriber is registered. The SMS integration service can also duplicate SM to the Mobile Integration Service. The mobile Integration Service can form IM and deliver it to the SIP URI address that is retrieved from the database based on the SMS recipient's number. The user's SIP extension receives IM from sender SMSGW@aina.fi "0400xxxxxx: SMS IM IW TEST".

In Figure 7 is shown a signalling diagram for the messaging procedure according to the invention and its embodiments. The SIP user sends (message SIP Message) a SIP Message to the SIP proxy in step 7-2. The user can send an IM to the address SMSGW@aina.fi. The IM content, for example, could be "0400xxxxxx: IM SMS IW TEST". The SIP proxy receives and transmits or relays (message SIP Message) in step 7-4 this message to the Mobile Integration service. I.e. the SIP proxy delivers IM to the Mobile Integration Service, which has registered itself with the used SIP URI. The Mobile Integration Service receives and transmits or relays the message contents in step 7-6 to the SMS Integration service. In other words, the Mobile Integration Service can extract the recipient from IM, and transmit or send the message in as many short messages as are necessary to the SMS integration service. The SMS Integration service can send in step 7-8 the message to SMSC. SMSC confirms (Message delivered) that it has received the SMS in step 7-10.

The SMS Integration service relays (signalling Message delivered) this confirmation to the Mobile Integration service, the Mobile Integration service confirms (signalling SIP 200 OK) the reception of the SIP Message with a SIP 200 OK message to the SIP proxy and finally SIP proxy relays (signalling SIP 200 OK) this confirmation to the SIP user, in steps 7-12 to 7-16, respectively. SMSC can thus deliver SMS to its recipients. The SMS Integration Service will also form the CDR for billing purposes.

When integrating the SMS-IM service, some points must be taken into consideration. Firstly, the operator's Mobile Integration Service will be attached as the SIP proxy's extension. The Service will then take care of integration. The SIP URI and the Display Name of the contact that will route IM to the Mobile Integration Service can be chosen to be illustrative, e.g. SIP SMSgate-way@company.com/SMS gateway. Also, when sending an SMS from the SIP proxy's SIP endpoint, an IM is sent to the SIP URI dedicated to the Mobile Integration Service's SMS service. After receiving the message, the Mobile Integration Service can extract or resolve the information on the sender and/or receiver and deliver the message to the operator's SMS interworking service. The service can then send the message to SMSC. The real recipient can be indicated at the beginning of IM with either a number or a name or some type of user id, and a separating character (e.g. ":") after that, and finally the message content. In case of MT SMS, the SM is directed to operator's SMS interworking service will send the SM to the actual mobile subscriber and additionally to the Mobile Integration Service, which can then check the recipient from its database, and send the message to as IM to receivers SIP URI.

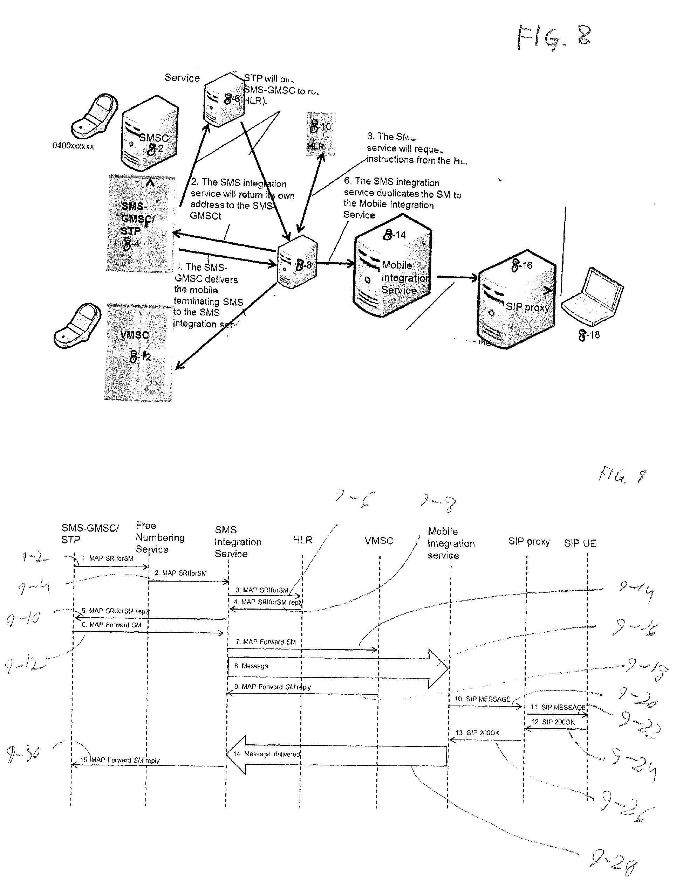

Figure 8 shows a system diagram for another messaging procedure according to the invention and its embodiments. In it a short message service centre SMSC will send a short message SM to the element 8-4. The element 8-4 describes MSC that is responsible for delivering the actual SM MAP (Short Message Mobile Application Part) message (SMS-GMSC) and the signal transfer point (STP). SMS-GMSC requests instructions from HLR as to the location of the subscriber (VLR address), and then it sends the SM message to that address. STP can direct the SMS-GMSC originated HLR inquiry to the free number service, which is a service which directs the queries related to each subscriber to the correct home location register HLR.

The element 8-6 describes the free number service. The service receives the HLR directed subscriber related network queries, and directs them to the correct HLR. In this case, the Mobile Integration Service user's SMS-related queries are directed to the SMS integration service instead of to HLR.

The element 8-8 describes the SMS integration service. When the service receives an SMS routing query related to the service subscriber, it can respond to the query with its own address, i.e., it pretends to be the VLR where the subscriber is registered. After receiving SM from SMS-GMSC, the SMS integration service delivers it to the Mobile Integration Service.

The element 8-10 describes the mobile network's subscriber register, the Home Location Register (HLR), and the element 8-12 describes the mobile network's switching centre, where the subscriber is registered, i.e. the Visiting MSC (VMSC).

The element 8-14 describes the service to be implemented that, after receiving an SMS from the SMS integration service (8-8) that is related to a service subscriber, sends the SM as the instant message to the SIP proxy (8-16) and to the user's SIP URI.

The element 8-16 describes the SIP proxy to whose SIP extension the mobile device can be disguised in the service. The SIP proxy receives the instant message sent by the Mobile Integration Service (as a SIP extension), whose recipient is another service user indicated by the recipient's SIP URI. The element 7-18 shows the SIP proxy's SIP extension.

Figure 9 shows a signalling diagram for the messaging procedure according to the invention and its embodiments. It can begin with the SMS-GMSC requesting (message MAP Send Routing Information for Short Message (SRI-for-SM)) in step 9-2 for SM routing information directed to the Free Numbering Service. The Free Numbering Service can route (message MAP SRI-for-SM) this query in step 9-2 to the SMS Integration Service. The SMS Integration Service requests (message MAP SRI-for-SM) SM routing information from the subscriber's HLR and HLR responds (message MAP SRI-for-SM reply) to the SMS Integration Service with the VMSC address of the subscriber in steps 9-6 and 9-8, respectively.

The SMS Integration Service responds (message MAP SRI-for-SM reply) to SMS-GMSC with its own address (not the VMSC address received from the HLR query) in step 9-10 and SMS-GMSC delivers (message MAP Forward SM) the terminating MAP SMS message to the SMS Integration Service in step 9-12. The MAP message can be named either ForwardSM or MT-ForwardSM depending on the MAP version used.

The SMS Integration Service delivers (message MAP Forward SM) in step 9-14 the MAP message to the VMSC address it received from the HLR query. In step 9-16 the SMS Integration Service also delivers (message Message) the message to the Mobile Integration Service. VMSC confirms (message MAP Forward SM reply) the delivery of the SMS to the SMS Integration Service in step 9-18.

In steps 9-20 to 9-26, respectively, the Mobile Integration Service sends (message SIP Message) a SIP Message to the SIP proxy, in which the contents are copied from the MAP SMS message, the SIP proxy relays (message SIP Message) this message to the SIP user, the SIP user confirms (message SIP 200 OK) the reception of the SIP Message with SIP 200 OK, and the SIP proxy relays (message SIP 200 OK) this confirmation to the Mobile Integration Service.

In step 9-28 the Mobile Integration Service responds (message Message delivered) to the SMS Integration Service with a confirmation of the SIP Message delivery and finally in step 9-30 the SMS Integration Service confirms (message MAP Forward SM reply) delivery of the SM to SMS-GMSC if either - or both - of the delivery events has been successful.

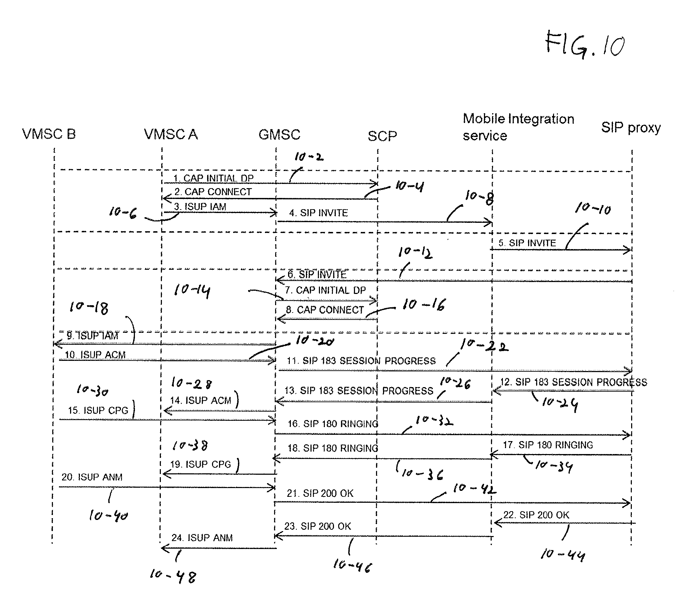

Figure 10 describes one embodiment of the invention. In step 10-2 a subscriber A calls a B subscriber, based on Camel Subscription Information in VLR, and the call is triggered to SCP before routing it onwards. In practice a CAP Initial DP message is sent from VMSC A's SSP to the SCP and the response is waited. CAP initial DP can contain a service key (e.g. 123), a calling party number (e.g. nat, 40xxxxxxx) and a called party number (e.g. sub, 050yyyyyyy).

In step 10-4, when receiving an CAP initial DP message, SCP recognizes the service(s) requested based on the service key. In this example the service is a forced routing service, which means that no matter what the subscriber has dialed, the call is routed to the specified destination. When recognizing the service to be the forced routing based on A-number, the SCP examines the calling party number and searches the correct routing prefix to be used with the subscriber from its database. Then SCP returns to the VMSC A a CAP connect containing the called party number with the routing prefix (e.g. sub, DD99050yyyyyyy).

In step 10-6, when VMSC A receives the CAP connect, it continues the call but with new called party number (e.g. sub, DD99050yyyyyyy). Digits of the prefix (e.g. sub, DD99) direct the call to the GMSC circuit group and an ISUP IAM is sent with the calling party number (e.g. nat, 40xxxxxxx) and the called party number including the prefix (sub, DD99050yyyyyyy).

In step 10-8, when receiving the ISUP IAM, the GMSC element analyses the received called party number (e.g. sub, DD99050yyyyyyy), and based on the prefix (e.g. sub, DD99) routes the call to the SIP trunk connection of MIS, the mobile integration service. Before routing the call to the MIS element, the routing prefix can be deleted. Thus a SIP Invite is sent to the MIS containing original mobile subscriber dialing in the request line (e.g. 050yyyyyyy) and the mobile subscriber's number (e.g. with added 0 to indicate the type of the number) in the from headers (e.g. 040xxxxxxx).

In step 10-10, the MIS element recognizes the calling mobile subscriber from the incoming SIP invite from the header and starts a new SIP session towards the SIP proxy as the SIP endpoint of the mobile subscriber. The request line contains the original mobile subscriber dialing (e.g. 050yyyyyyy) and a fixed number dedicated to the mobile subscriber in the from header (e.g. 09zzzzzzz). The message is sent from the IP address/TCP or UDP port combination dedicated in the MIS element to the mobile subscriber.

In step 10-12, the SIP proxy analyses the request line (e.g. 050yyyyyyy) and routes the call to the PSTN via SIP trunk connection to the GMSC element. In practice, SIP Invite is sent to the GMSC element with request line containing the original mobile subscriber dialing (e.g. 050yyyyyyy) and a fixed number dedicated to the mobile subscriber in the form of the header (e.g. 09zzzzzzz).

In step 10-14, GMSC has a static trigger set to the SIP proxy's SIP trunk, thus when receiving an incoming session from the SIP proxy's SIP trunk, the GMSC's SSP can send a CAP initial DP message to the SCP element. CAP initial DP can contain the service key (e.g. 124), the called party number (e.g. nat, 40xxxxxxx) and the calling party number (e.g. sub, 09zzzzzzz).

In step 10-16, the SCP element recognizes the service requested (e.g from the service key) to be the both CLI modification and number portability forced routing service. Thus, it can return to the GMSC SSP and CAP connect including the calling party number with the number portability prefix (e.g. sub, 1 D387D050yyyyyyy), the calling party number (e.g. sub, 09zzzzzzz) and the additional calling party number containing the subscribers mobile number (e.g. 040xxxxxxx).

In step 10-18, the GMSC element analyses the received called party number containing the number portability prefix and realizes that the called subscriber ported to the same operator, and thus GMSC performs an HLR enquiry.

In step 10-20, HLR receives the MAP Send Routing Information message and retrieves a Mobile Subscriber Roaming Number (MSRN) from the called subscribers MSC (VMSC B) with MAP signaling (not included in the signaling chart). HLR returns the received MSRN to the GMSC element with MAP SRI ack message.

In step 10-22, when received the MSRN, the GMSC element routes the call to the CGR of VMSC B, resulting an ISUP IAM to be sent to VMSC B. In the IAM, the called party number is MSRN, the calling party number (e.g. nat, 9zzzzzzz) and the additional calling party number (e.g. nat, 40xxxxxxx).

The rest of the signaling as shown in steps from 10-24 to 10-48 in Figure 10 is normal call progress signaling messages mapped between protocols.

For using instant messaging IM service to control operator services, a service specific operator's SIP client application can be added as a SIP extension of the SIP proxy, which will receive the lMs and control the service. The contact can be named illustratively to the SIP proxy's database. As an example of the service is the showing of calling line identity CLI (as a sender) that is equivalent to the CLI shown to the called party, when the service subscriber makes a call. It is to be noted that the customer may have several numbers in use.

In this case, the service users, when they wish to change their CLI number, sends an IM to, e.g., contact CLI@company.com with the number they wish to use as CLI in the message. Then, the operator's SIP client application will determine if said user is allowed to use that number. If the number is allowed, the application changes the CLI, and informs the user of this by an IM.

As described above for the mobile integration service, voice and presence, when the mobile subscriber registers to the network, a notification is sent to the operator's mobile integration service, which then registers the subscriber as a SIP endpoint to an external SIP proxy. The calls made by a mobile subscriber (MO calls; mobile originating calls) will be delivered - regardless of the dialled number - to the operator's Mobile Integration Service, which will direct the call to the SIP proxy, as if a regular SIP endpoint had made the call. The calls terminating to the mobile (MT calls; mobile terminating calls) subscriber will be directed to the SIP proxy, which will then simultaneously direct the call both to the SIP end point, and to the operator's mobile integration server, which will, in turn, direct the call to the mobile phone.

The goal of the invention and its embodiments is achieved, when the SIP access interface of the SIP proxy is used for registering the mobile as a SIP endpoint and for routing the MO and MT calls. It is assumed that the forced routing service for MO/MT calls and the mobile presence service with information about the subscriber being online or offline, and a basic SIP trunk service, which means a SIP based connection to PSTN for SIP proxy, exist. The Mobile Integration Service MIS is implemented between the SIP proxy and a PSTN/PLMN switch. In practice, this is a server from which there is a SIP trunk connection to a PSTN/PLMN switch, and capability to receive push type notifications from the mobile presence service. When receiving a notification that the mobile has registered to the network, as default behaviour, the Mobile Integration Service initiates a registration procedure toward the SIP proxy with the mobile subscriber's identity in the SIP proxy. The user interface through which the user may manually control, whether the Mobile Integration Service is active or not for that user, can also be implemented in the Mobile Integration Service. For example, a predefined SMS to the service's number is an adequate Ul for this purpose. When not active, the Mobile Integration Service does not react to the user registration and/or deregistration to/from the mobile network. At this point, it must be noted that if the mobile positioning procedure is applied to emergency calls and the recognition of the caller as a mobile user is dependent on the calling line identity CLI, the number used as CLI in outgoing calls from the SIP proxy must be a fixed number.

When an MO call is initiated, the forced routing service for originating calls is applied to route the call, despite what the end user selection is, to the Mobile Integration Service via SIP trunk between the PSTN/PLMN switch. In this instance, the exception of the mobile originated emergency call must be noted. The mobile integration service recognizes the calling subscriber from the incoming signalling and can initiate a new call towards the SIP proxy as the calling subscriber's SIP extension of the SIP proxy. The proxy analyses the selection and routes the call according to its configuration. As an option, there may be implemented a CLI change service which triggers to incoming calls (with the exception of SIP originated emergency calls) from the SIP proxy via the SIP trunk between it and PSTN/PLMN switch. With this service, the option of selecting the used CLI may be offered to the calling subscriber, and the user may select the option to use his mobile number as CLI.

When an MT call is initiated, the forced routing service for terminating calls (which is applied before HLR enquiry) is applied to route the call from PSTN/PLMN switch to the SIP Proxy via a SIP trunk between the elements. The forced routing may use a C-number or a routing prefix to achieve this. The SIP proxy routes the call to the registered SIP endpoint of the subscriber, including the Mobile Integration Service, which appears as one of the subscriber's SIP endpoints. The Mobile Integration Service routes the call back to the PSTN/PLMN switch via the SIP trunk between them. At this point, care must be taken that no routing loops occur. This is achieved, for example, with special analysis in the PSTN/PLMN switch applied to the incoming calls from the Mobile Integration Service, or to calls marked with a predefined prefix. This way, the call can be recognized and directed to a HLR enquiry without triggering any forced routing service. This prevents routing loops from happening.

It is also part of the goal to be able to integrate SMS and IM services. This is achieved similarly to speech service integration, by routing at MT SM's to both to the mobile terminal and to the SIP proxy as IM's. Also IM-SMS interworking is made possible by introducing a dedicated SIP endpoint, which transfers the IM to SMS.

In the SIP originating SMS service, in order to be able to send an IM, which is then sent as an SMS to the receiver, an user "SMS gateway" must be introduced to the SIP proxy. The Mobile Integration Service acts as an SMS interworking service by registering the user "SMS gateway" as SIP endpoint of the SIP proxy. When receiving an IM terminating to user "SMS gateway" from a SIP proxy user, the Mobile Integration Service examines the contents of the IM, which must be in a predefined format. For example the format of the IM may be the following: the recipient's number starts the IM and is followed by ":" and the actual message. Then, the Mobile Integration Service removes the recipient information and forms a message to an SMS integration service, and resolves the sender information from the IM sender information, and sets the recipient information as it was retrieved from the contents of the IM.

In the SIP terminating SMS service, the MT SMS must first be routed to the SMS integrations service before it can be routed to the Mobile Integration Service. If this is done before the HLR enquiry, the routing loop is prevented. If this is not possible, the HLR must support features that address this problem. A straightforward solution is to route the MAP SRI-for-SM messages to the SMS integration service, which then replies with its own GT address as the subscriber's VMSC address in the MAP SRI-for-SM reply. This results in the SMS-GMSC sending the MAP MT-Forward SM (contains the actual message) to the SMS integration service. The SMS integration service the sends MAP SRI-for-SM to the HLR and receives the mobile subscribers VLR address in the reply. The SMS integration service sends the MAP MT-Forward SM message to the VLR mobile subscriber is roaming and thus delivers the SM to the mobile. Simultaneously SMS integration service sends the message contents to the Mobile Integration Service via a specified interface. The Mobile Integration Service sends the message to the SIP proxy as user "SMS gateway" terminating to the SIP URI of the receiving mobile/SIP proxy subscriber. The SIP proxy then routes the IM to the SIP endpoints of the receiving mobile user depending on how it is configured, including the Mobile Integration Service, which has registered as the users "mobile SIP endpoint". When the Mobile Integration Service receives IM terminating to mobile user's SIP endpoint, it check is the sender the user "SMS gateway". If it is, the mobile integration service does not sent the message to the SMS integration service.

As regards to the user interface for controlling the operator service, the Mobile Integration Service may also optionally be used for turning an IM client as Ul for controlling operator's services. This can be done by creating service specific SIP URI's. If an IM in predefined format is sent to this type of SIP URI its directed to the Mobile integration client, which recognizes the sender from the header information and extracts and executes the user command via a interface built from the service controlling.

The technical issue that has to be solved is that the Mobile Integration Service must act as potentially thousands of clients located in one server (or server cluster). Thus the normal practice that every client has a dedicated IP address does not scale. This is solved by configuring the Mobile Integration Service to send the SIP signalling as a regular SIP client located behind the firewall using port NAT. This way, one user requires only one dedicated port instead of an IP address. The downside is that probably no existing signalling stack or API can be used for creating the service, but new ones, dedicated to this service, must be implemented.

The invention is based on the idea of making the mobile device with the circuit-switched services appear to the SIP proxy as a SIP client. This can be achieved by the registering procedure and the forced routing procedure and then by the communication procedure. The forced routing can be communication routing such that the traffic or communication seems to be originating from the registered extension or terminating to the registered extension. Thus at least to different forced routing cases exist, the mobile originated one and the mobile terminating one.

The services can be mobile services or not-mobile services. A route, passage or channel with no state can be replaced by a server with a state, and communication can always be routed to the server. In other words, the mobile integration service node emulates a sip extension, and the SIP proxy sees the mobile device as the extension. E.g. the proxy sees the voice communication as VoIP (voice over IP, Internet Protocol) communication.

In the invention and its embodiments a method is provided for receiving a notification message indicating a mobile subscriber changing his status from offline to online and triggering, in response to receiving the notification message, a subscriber registration procedure for registering the subscriber to an external SIP proxy as a proxy end point by sending a registration message to the external SIP proxy, the registration message comprising an identifier of the subscriber.

The method further comprises receiving a further notification message indicating a mobile subscriber changing his status from online to offline; and triggering, in response to receiving the further notification message, a subscriber unregistration procedure for unregistering the subscriber from the external SIP proxy by sending a registration message to the external SIP proxy, the registration message comprising the identifier of the subscriber and an indication of unregistering the registration.

Furthermore, a method is provided for receiving a request for a routing address; checking whether or not a calling subscriber has a mobile integration service; if yes, returning routing information to a network node providing the mobile integration service as the routing address; and otherwise returning instructions to use a location dependent routing address of the called subscriber.

The routing information can be in many different formats like in an international format (code +358 for Finland) or in a national format (without a country code) or in a subscriber format and/or comprises a prefix information and information on the calling subscriber.

Furthermore, a method is provided for receiving a message initiating a connection establishment between a calling subscriber and a called subscriber, the initiating message comprising an identifier of the calling subscriber and an identifier of the called subscriber, and the initiating message establishing a first session for a connection between a calling subscriber and a mobile integration service; detecting the calling subscriber based on the initiating message; and establishing a second session for a connection between a mobile integration service and a SIP proxy as a calling subscriber extension of said SIP proxy.

Furthermore, a method is provided for receiving a message initiating a connection establishment between a calling subscriber and a called subscriber, the initiating message comprising an identifier of the calling subscriber and an identifier of the called subscriber, and the initiating message establishing a first session for a connection between a SIP proxy and a mobile integration service; detecting the called subscriber based on the initiating message; and establishing a second session for the same connection between the mobile integration service and the called subscriber.

A network node, according to the invention and its embodiments comprises means for implementing the above-mentioned methods.

A system according to the invention and its embodiments can comprise at least one first apparatus configured to perform one or two of the above-mentioned methods, and/or at least one second apparatus configured to perform other one or two of the above-mentioned methods and/or at least one third apparatus configured to perform still other one or two of the above-mentioned methods.

The first apparatus, the second apparatus and the third apparatus can be a service control point and/or a mobile integration service node and/or a SIP proxy element.

The invention and its embodiments can also comprise a computer program product comprising program instructions which, when run on a computing apparatus, causes the computing apparatus to perform any of the above-mentioned methods.

In the invention and its embodiment the registering procedure, the unregistering procedure, the routing address request procedure and the routing procedure can be combined with each other.

The invention and its embodiments have many advantages. The most significant advantage is that the user is now able to fully combine his identity in any type of SIP proxy into one, even though he had many terminals in use with some located PLMN/PSTN.

The invention and its embodiments also solve the problems arised from the integration of the service to the network side. The implementations, in which either 1) if the SIP proxy supports it, it should route all MO and MT calls through the SIP proxy using a forced routing service, wherein the mobile must be created as an "always registered" user, and the SIP proxy must support call tromboning or the circulation of the communication traffic through an external device or through the SIP trunk interface, the presence information for the mobile apparatus is not fully accurate since it is "always registered"; or 2) the network mobile presence service updates the presence status of the mobile to the SIP proxy having also the downside of the mobile subscriber and the VoIP extension being of separate entities, although they are the same person. It should be noted that the statistics do not include mobile calls without additional work.

Also the statistics are now easy to collect instead of collecting the statistics separately from the services and combining them in order to achieve correct overall statistics. The SIP proxy statistics can include the pure mobile calls, as well, and can be combined to the SIP proxy's statistics.

Furthermore, the service level is now guaranteed in live mobile networks with real time speech through a PS data connection, and the presence information can easily be presented to the SIP proxy user.

These problems are eliminated according to the invention and its embodiments.

The invention and its embodiments achieve the ability to integrate the mobile apparatus to any SIP proxy in such a way, that to the SIP proxy, the user is one entity with several terminals, SIP endpoints, including the mobile apparatus without requiring a software SW client to be installed to the mobile terminal or special feature support in the SIP proxy with guaranteed QoS.

It will be obvious to a person skilled in the art that, as the technology advances, the inventive concept can be implemented in various ways. The invention and its embodiments are not limited to the examples described above but may vary within the scope of the claims.

## Claims

1. A method, **characterized by**
receiving (2-6) a notification message indicating a mobile subscriber changing his status from offline to online; and
triggering (2-8), in response to receiving the notification message, a subscriber registration procedure for registering the subscriber to an external SIP proxy as a proxy end point by sending a registration message to the external SIP proxy, the registration message comprising an identifier of the subscriber.

2. A method as claimed in claim 1, wherein the method further comprises
receiving (2-18) a further notification message indicating a mobile subscriber changing his status from online to offline; and
triggering (2-20), in response to receiving the further notification message, a subscriber unregistration procedure for unregistering the subscriber from the external SIP proxy by sending a registration message to the external SIP proxy, the registration message comprising the identifier of the subscriber and an indication of unregistering the registration.

3. A method, **characterized by**
receiving (3-4) a request for a routing address;
checking whether or not a calling subscriber has a mobile integration service;
if yes, returning (3-6) routing information to a network node providing the mobile integration service as the routing address; and
otherwise returning (3-6) instructions to use a location dependent routing address of the called subscriber.

4. A method according to claim 3, wherein the routing information is in an international format or in a national format or in a subscriber format and/or comprises a prefix information and information on the calling subscriber.

5. A method according to claims 3 or 4, further comprising performing the method steps according to claim 1 or 2.

6. A method, **characterized by**
receiving (3-8) a message initiating a connection establishment between a calling subscriber and a called subscriber, the initiating message comprising an identifier of the calling subscriber and an identifier of the called subscriber, and the initiating message establishing a first session for a connection between a calling subscriber and a mobile integration service;
detecting the calling subscriber based on the initiating message; and
establishing (3-10) a second session for a connection between a mobile integration service and a SIP proxy as a calling subscriber extension of said SIP proxy.

7. A method, **characterized by**
receiving (5-10) a message initiating a connection establishment between a calling subscriber and a called subscriber, the initiating message comprising an identifier of the calling subscriber and an identifier of the called subscriber, and the initiating message establishing a first session for a connection between a SIP proxy and a mobile integration service,
detecting the called subscriber based on the initiating message; and
establishing (5-12) a second session for the same connection between the mobile integration service and the called subscriber.

8. A method according to claims 6 or 7, further comprising performing the method steps according to claims 1 to 4.

9. A network node, comprising means for implementing a method according to any of claims 1 to 8.

10. A system, comprising at least one first apparatus configured to perform a method according to claims 1 and 2, and at least one second apparatus configured to perform a method according to claims 3 and 4 and at least one third apparatus configured to perform a method according to claims 5 and 6.

11. A system according to claim 10, wherein the first apparatus is a service control point and/or the second apparatus is a mobile integration service node and/or the third apparatus is a SIP proxy element.

12. A computer program product comprising program instructions which, when run on a computing apparatus, causes the computing apparatus to perform a method according to any of claims 1 to 8.
